# EUROPÄISCHE PATENTANMELDUNG

(11) **EP 0 606 538 A1**
(43) Veröffentlichungstag der Anmeldung: **20.07.1994**
(21) Anmeldenummer: 93116730.8
(22) Anmeldetag: 15.10.1993
(51) Int. Cl.: B24B 55/06

(54) **Steinstaubabsaugung**

(30) Priorität: 14.01.1993 DE 4300830
(71) Anmelder: BECKER VERFAHRENSTECHNIK, DIPL. ING. ERNST BECKER GmbH & CO KG, D-71404 Korb (DE)
(72) Erfinder: Becker, Ernst Otto, D-71404 Korb (DE)
(74) Vertreter: Alber, Norbert

(57) **Zusammenfassung**

Beschrieben wird ein Verfahren zum Entfernen von Feinstäuben mit geringen Partikelgrößen, bei dem die Luftabsaugung unterhalb der Kopfhöhe der Benutzer stattfindet, die Luftzufuhr der gefilterten Luft möglichst weit oben im Raum stattfindet, die Strömungsgeschwindigkeit an den Luftabsaugstellen in der Nähe der Arbeitsplätze einen geringeren Wert aufweist als die Strömungsgeschwindigkeit an den übrigen Luftabsaugstellen und die Austrittsgeschwindigkeit der gefilterten Luftzufuhr so gewählt ist, daß die Strömungsgeschwindigkeit in Kopfhöhe kleiner als 2m/sek. beträgt. Weiterhin wird eine Vorrichtung zur Feinstaubabsaugung beschrieben.

## Beschreibung

Die Erfindung betrifft ein Verfahren sowie eine Vorrichtung zum Verbessern der Raumluft.

Eine zunehmende Anzahl von Personen reagiert allergisch auf bestimmte Feinstäube, vor allem bei ständiger Beaufschlagung mit Staub der gleichen Sorte, wie er etwa an Staub entwickelnden Arbeitsplätzen auftritt. Dies gilt für den Staub in Bibliotheken ebenso wie für den Steinstaub in Steinmetz-Betrieben oder den Mehlstaub in Bäckereien, sowie den Holzstaub in Schreinereien. Dabei ist jedoch zwischen dem Feinstaub mit einer Partikelgröße von 0,1 bis 100 µm und den Staubanteilen mit Parikelgrößen ab etwa 50 µm ohne feste Obergrenze zu unterscheiden.

Denn die allergischen Reaktionen werden vor allem von den Feinstäuben bewirkt, die durch die natürlichen, biologischen Abwehrmechanismen des Menschen nicht zurückgehalten werden können und daher die sensiblen Schleimhäute erreichen.

Zusätzlich ist bei Steinstaub das gegenüber anderen Staubarten erhöhte spezifische Gewicht bei gleichem Partikeldurchmesser zu berücksichtigen, sowie die besonders große Bandbreite der Partikelgröße innerhalb des auftretenden Steinstaubes.

Staubabsauganlagen für staubgefährdete Arbeitsräume sind generell bekannt, wobei die staubbeladene Luft abgesaugt, gefiltert und anschließend der Raumluft wieder zugeführt wird.

Um eine möglichst vollständige Befreiung von Staubpartikeln aller Größenordnung zu erreichen, und den Einzugsbereich der einzelnen Staubabsaugstellen möglichst groß zu halten, wird dabei mit hohen Ansauggeschwindigkeiten, und in der Folge auch relativ hohen Austrittsgeschwindigkeiten bei der Luftzufuhr der gereinigten Luft gearbeitet.

Dies hängt oft damit zusammen, daß auch relativ große und damit schwere Teilchen von der Luftabsaugung miterfaßt werden sollen.

Es ist daher gemäß der Erfindung ein Verfahren sowie eine Vorrichtung zu ihrer Durchführung zu schaffen, welches die Reinigung der Raumluft in Arbeitsräumen von Feinstäuben ohne unangenehme Begleiterscheinungen sowie mit geringstmöglichem Installations- und Unterhaltsaufwand ermöglicht.

Diese Aufgabe ist durch die kennzeichnenden Merkmale der Ansprüche 1 und 14 gelöst. Vorteilhafte Ausführungsformen ergeben sich aus den Unteransprüchen.

Das im folgenden anhand der Reinigung der Luft von Steinstaub beschriebene Verfahren, kann - unter Berücksichtigung der Besonderheiten anderer Stäube - analog auch für andere Staubarten angewandt werden.

Dadurch, daß die Luftzufuhr der gefilterten Luft oberhalb und die Luftabsaugung unterhalb der Kopfhöhe der Benutzer stattfindet, entsteht generell von den Stellen, an denen Staub erzeugt wird, die sich in der Regel in Arbeitshöhe der Benutzer befinden, eine Strömung zu den Luftabsaugstellen hin, die sich auf gleicher Höhe oder sogar darunter befinden. Die generelle Strömungsrichtung ist somit von den Luftzufuhrstellen oberhalb der Köpfe der Benutzer zu den Luftabsaugstellen, und damit im relevanten Bereich zwischen dem Körper, vor allem dem Kopf, des Benutzers und der Staubquelle vom Körper des Benutzers weg, an der Staubquelle vorbei zur Absaugstelle hin.

Da an den Arbeitsplätzen mit Strömungsgeschwindigkeiten von max. 1 m/Sek. gearbeitet wird, tritt keine spürbare Zugluft auf.

An Staubquellen, an denen kein Benutzer direkt arbeitet, kann mit etwas höheren Absaug-Raten bis zu 2 m/Sek. gearbeitet werden.

Analog wird auch bei der Luftzufuhr mit Austrittsgeschwindigkeiten an der Zufuhrstelle gearbeitet, die so gering sind, daß aufgrund der nach dem Austritt auftretenden Verlangsamung der Strömung bei Erreichen der Köpfe der Benutzer eine Geschwindigkeit von max 1 m/Sek. vorliegt, was ebenfalls weder als unangenehm empfunden wird, noch die langzeitlichen physikalischen Erscheinungen von Zugluft mit sich bringt.

Vorzugsweise sollte die Absaugung zumindest an allen Orten der Staubentstehung, und dort möglichst großflächig, vorgenommen werden. Aufgrund großflächiger Luftabsaugschlitze und in diesen parallel zueinander angeordneten Luftleitbleche wird erreicht, daß kugelförmig um den Absaugpunkt herum eine gleichmäßige, mit zunehmendem Abstand vom Absaugungspunkt abnehmende, Strömungsgeschwindigkeit erreicht wird, so daß der Benutzer den angegebenen Maximalwerten von einem m/Sek. nur dann unterliegt, wenn er in unmittelbarer Nähe der Absaugungsstelle arbeitet. Bereits in 1/2 m Entfernung ist dieser Wert auf etwa die Hälfte reduziert.

Bei diesen Strömungsgeschwindigkeiten dauert es jedoch relativ lange, nämlich teilweise mehr als 1 Sekunde, bis ein von dem Luftstrom erfaßtes Teilchen abgesaugt ist. Da gröbere Staubpartikel mit einem Durchmesser von mehr als ca. 50 µm jedoch bereits Sinkgeschwindigkeiten von mehreren cm/Sek. aufweisen, werden solche relativ großen Staubpartikel mit hoher Wahrscheinlichkeit auf den Untergrund absinken, ohne von der Feinstaubabsaugung des Raumes erfaßt zu werden. Dies kann jedoch in Kauf genommen werden, da Staubpartikel dieser Größenordnung nicht mehr bis in Kopfhöhe aufsteigen können. Besonders bei steinstaub ist die Selektierung zwischen kleinen, von der Feinstaubabsaugung erfaßten Partikeln und größeren, zunehmend schwereren Partikeln sehr stark aufgrund des hohen spezifischen Gewichtes der Steinstaubpartikel.

Die Absaugung an den Arbeitsplätzen und den Staubquellen, in erster Linien den Maschinen, geschieht über horizontal angeordnete, gegenüber der Arbeitsfläche überhängenden Absaugschlitze, die bei Maschinen vorzugsweise entlang der vollen Länge der vom Benutzer abgewandten, rückwärtigen Kante bei vertikaler Arbeitsfläche angeordnet werden.

Bei horizontal wirkendem Arbeitsmittel wie senkrecht arbeitenden Bandsägen, senkrecht arbeitenden Bohrmaschinen etc., werden die Luftabsaugstellen im Hinblick auf die Beschleunigungsrichtung der entstehenden Staubpartikel angeordnet. Bei senkrecht wirkendem, schnell laufendem Bohrer werden die Staubpartikel in einer horizontalen Ebene weggeschleudert, so daß hier ebenfalls eine Absaugung über horizontale Schlitze sinnvoll ist, während bei einer senkrecht wirkenden Bandsäge oder Trennscheibe mit senkrecht stehenden Absaugschlitzen, die jedoch am Fuß eine ausreichende Breite aufweisen und möglichst wenigstens bis zum untersten Einwirkungspunkt des Arbeitsmittels herabreichen sollten, aufweisen müssen.

Bei Handarbeitsplätzen wird die Absaugung ebenfalls an der rückwärtigen Kante der Arbeitsfläche angeordnet. Da bei Steinmetzen häufig freistehende, von allen Seiten zugängliche Arbeitsplätze benutzt werden, so daß der daraufliegende Stein von allen Seiten bearbeitet werden kann, ohne gedreht werden zu müssen, sind waagerechte Absaugschlitze möglichst allseits und in der Höhe und Seitenlage verstellbar angeordnet. Um die Zugänglichkeit des Arbeitsstückes dabei nicht zu behindern, werden die einstellbaren Absaugschlitze vorzugsweise von unten ehr herangeführt und auch die Abführleitungen nach unten abstrebend angeordnet, und von dort über Bodenleitungen etc. abgeführt.

In nachträglich montierten Fällen, ist die Abführung nach oben möglich, wobei eine einfache, möglichst vollständige Entfernung der Absaugschlitze nach oben mit einem Handgriff möglich sein sollte. Um die Geräuschbelastung durch die ebenfalls innerhalb des Raumes angeordneten Lüfteraggregate sowie die Filterdurchströmung gering zu halten, werden als Ventilatoren Radialventilatoren mit vorwärtsgekrümmten Laufradschaufeln verwendet. Diese ergeben bereits bei niedrigen Drehzahlen einen ausreichenden Arbeitsdruck. Zur Schallisolierung befinden sich der Ventilator zusammen mit dem Filterelement in einem doppelwandigen, mit SchalldämmMaterial gefüllten Gehäuse, und es ist sowohl vor als auch nach diesem Element ein Schalldämpfungselement angeordnet.

Im Schalldämpfer wird der Luftstrom in Einzelströme aufgeteilt, und die Einzelströme mit einem Querschnitt von jeweils maximal 20 x 30 cm in jeweils allseits von Dämm-Material umschlossenen, wenigstens einen Meter langen Bahnen geführt. Dabei können die parallel geführten Teilströme in einem gemeinsamen, tragenden Gehäuse untergebracht sein.

Um auch Körperschall möglichst auszuschließen, werden Schalldämpfer sowie möglichst auch Filterelement und Ventilator mittels Körperschall absorbierenden Elementen an den Aufhängevorrichtungen sowie gegeneinander befestigt. Als Körperschall aufnehmendes Element zwischen den einzelnen Aggregaten kann eine entsprechend ausgelegte, jeweils umlaufend dicht angeordnete Dichtung dienen.

Wenn dabei zusätzlich in den Rohrsystemen eine Strömungsgeschwindigkeit von 13 m/Sek. nicht überschritten wird und die Strömungsgeschwindigkeit in den Filtern etwa 0,6 m/Sek. überschreitet, bei einer Filtereintrittsgeschwindigkeit von etwa 1, 5 m/Sek., ist ein Arbeiten unter normalen Arbeitsbedingungen annähernd ohne Zusatzgeräusche möglich.

Wenn die umgewälzte Luft gekühlt und mit Feuchtigkeit angereichert wird, so geschieht dies entweder mittels einem extern erzeugten Kaltwasser oder Solekreislauf, der einen Wärmetauscher im Luftstrom durchläuft, oder es wird in einem Verdampfer, der im Luftstrom angeordnet ist, direkt ein Kältemittel eingespritzt und verdampft, wobei dann der Kompressor in der Regel außerhalb des Arbeitsraumes angeordnet sein sollte, um die Zusatzgeräusche gering zu halten.

Um weiterhin die Luftverteilung nicht linienförmig zu konzentrieren, sondern diffus zu halten, sollte die Luftzufuhr in verschiedene Richtungen und möglichst an verschiedenen Punkten erfolgen. Da letzteres ein relativ hoher baulicher Aufwand bedeuten kann, wird durch die Zufuhr über eine einzige, unter der Decke angebrachte, quaderförmige Luftzufuhrkammer, jedoch Luftaustritt über alle drei zur Verfügung stehenden Seiten dieser Kammer, ein guter Kompromiß erreicht. Zusätzlich kann die Austrittsrichtung entsprechend der örtlichen Gegebenheiten, wie Säulen, große Maschinen etc. reguliert werden, indem innerhalb des Luftzufuhrgehäuses vertikal stehende und direkt am Austritt oder außerhalb der Austrittsfläche horizontal liegende, jeweils bewegliche und einstellbare, Luftleitbleche angeordnet werden.

Eine Ausführungsform gemäß der Erfindung ist nachfolgend beispielhaft näher erläutert. Es zeigen:
Fig. 1 einen mit Absaugleisten ausgestatteten Arbeitsplatz und
Fig. 2 eine Aufsicht auf einen ausgestatteten Arbeitsraum.

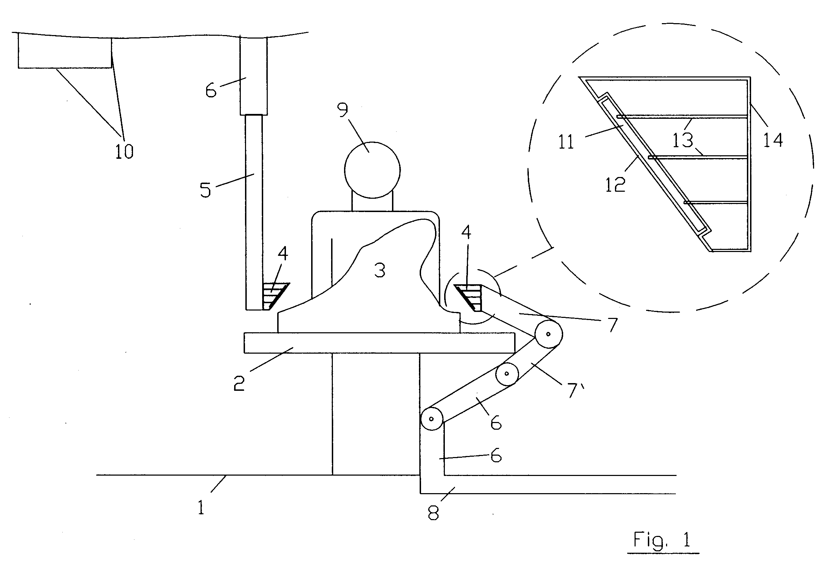

Fig. 1 zeigt einen frei im Raum, auf dem Boden 1 stehenden Arbeitstisch 2, auf dem ein Werkstück 3 steht. Das Werkstück 3 befindet sich dabei unterhalb der Höhe des Kopfes 9 des daran arbeitenden Benutzers.

Da bei solchen allseits zugänglichen Arbeitstischen der Benutzer um das Werkstück herumgehen muß und abwechselnd auf verschiedenen Seiten arbeitet, ist es notwendig, daß sich der Benutzer die Absaugleisten 4 sowohl hinsichtlich der Höhe als auch des Querabstandes vom Werkstück bzw. vom Arbeitstisch mit einem einzigen Handgriff neu einstellen kann.

Der Normalfall einer Montage der Absauganlage besteht darin, daß die Arbeitsrohre 6 an den Raumwänden hochgeführt und unter der Decke zum Aggregateblock bestehend aus Ventilator, Schalldämpfern, Filter und eventuell Kühler, geführt werden.

Bei einem frei im Raum stehenden Arbeitstisch 2 muß der Benutzer an jeder Seite des Werkstückes 3 arbeiten können und sich auf der jeweiligen Seite die Absaugleisten 4 mit einem einzigen Handgriff entfernen sowie an den übrigen Seiten passend in der Höhe und Querrichtung einstellen können.

Zu diesem Zweck wird die Luft von den Absaugleisten 4 aus zunächst über verstellbare Ableitungsrohre 5 zu dem oberhalb des Kopfes 9 des Benutzers beginnenden festen Ableitungsohren 6 geführt. Die verstellbaren Ableitungsrohre 5 sind dabei über Gelenke und Teleskopauszüge verstellbar, in ihrer Bewegung jedoch selbsthemmend ausgeführt und damit mittels einfacher Verschiebung einstellbar.

Um die gerade nicht benötigte Absaugleiste jedoch nicht immer bis über den Kopf des Benutzers hinweg ausserhalb des Arbeitsbereiches bringen zu müssen, empfiehlt sich die Ableitung von der Absaugleiste 4 aus nach unten. Zu diesem Zweck sind über schwenkbare oder flexible Abschnitte 7, 7' des Ableitungsrohres Ableitungsmöglichkeiten zu dem unterhalb des Arbeitstisches beginnenden, festen Ableitungsrohr 6 gegeben. Um den glattflächigen Oberboden 1 nicht zu beeinträchtigen, wird dabei die Ableitung zu den an den Wänden installierten, nach oben gerichteten Ableitungsrohren über einen Bodenkanal 8 erfolgen.

In der vergrößerten Querschnittsdarstellung der Absaugleiste 4 ist zu erkennen, daß diese im Querschnitt eine im wesentlichen dreieckig gestaltet ist mit einer schräg unter einem Winkel von etwa 45° überhängenden Absaugöffnugen 11, die durch ein Absauggitter 12 gesichert ist um leichte Gegenstände wie etwa Papiere, nicht unbeabsichtigt in das Ableitungsrohr gelangen zu lassen.

In der Detaildarstellung ist zu erkennen, daß parallel zueinander und im wesentlichen horizontal Luftleitbleche 13 mit dem Korpus 14 der Absaugleiste 4 fest verbunden sind, die bis zur Absaugöffnung 11 reichen und eine im wesentlichen laminare Strömung im Absaugbereich aufrechterhalten, und damit gleichmäßige Strömungsgeschwindigkeiten.

In Fig. 1 ist ferner zu erkennen, daß die Luftzufuhröffnungen unter der Decke des Arbeitsraumes und damit oberhalb des Kopfes 9 des Benutzers angeordnet sind, so daß eine permanente, langsame Luftbewegung von den hoch angeordneten Luftzufuhröffnungen 10 zu den unterhalb des Kopfes 9 angeordneten Absaugöffnungen 11 der Absaugleisten 4 stattfindet und damit die Schwebstoffe von ihrem Entstehungsort aus nach unten gesaugt werden und nicht mehr den Kopf des Benutzers erreichen.

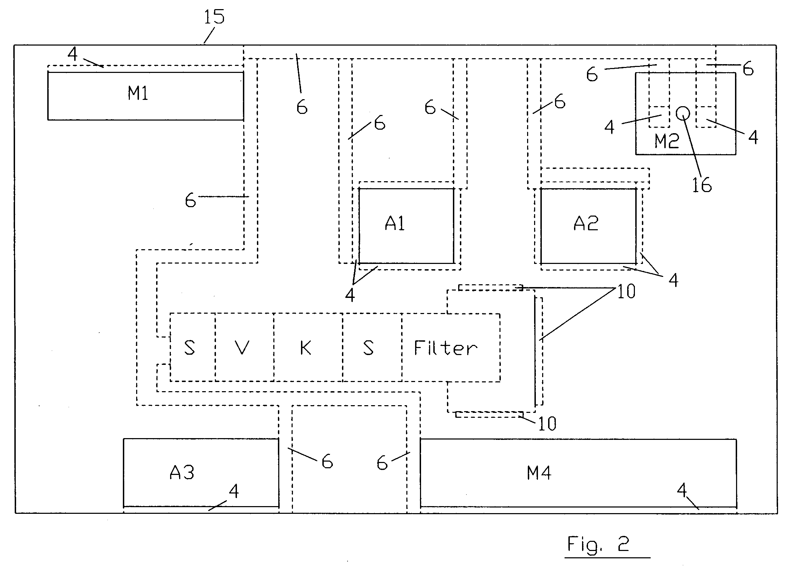

Fig. 2 zeigt in der Aufsicht einen schematischen Installationsplan der Absauganlage.

An den Maschinen M1, M2 und M4 sowie den Arbeitsplätzen A1 bis A3 sind jeweils Absaugleisten 4 angeordnet und zwar bei den nicht allseits zugänglichen Maschinen und Arbeitsplätzen jeweils an den vom Benutzer abgewandten, rückwärtigen Kanten, jedoch über die gesamte Kantenlänge. In der Höhe wird der Entstehungsort der Staubteilchen gewählt, in der Regel die Oberkante der Arbeitsfläche.

Dabei stellt die Maschine M2 eine Ausnahme dar, indem dort nicht flächig, wie bei Flächenschleifmaschinen etc., sondern mit einem senkrechten Arbeitsmittel 16, etwa einer Bandsäge, gearbeitet wird. Dabei sind auch die Absaugleisten 4 senkrecht gestellt und beidseits neben dem senkrechten Arbeitsmittel angeordnet.

Sämtliche Absaugleisten 4 sind über Ableitungsrohre 6, die sich zunächst zu den Wänden und dort in die Höhe erstrecken, um die unter der Decke zentral im Raum angeordneten Aggregate zu erreichen.

Der Aggregateblock besteht dabei aus dem Ventilator und einem diesem eventuell zugeordneten Kühlaggregat, wobei vor und nach dem Ventilator in Durchflußrichtung jeweils ein Schalldämpfer angeordnet ist. Der Aggregateblock enthält ferner das Filterelement, sowie an seinem Ende das in der Regel quaderförmige Gehäuse zur Abgabe der gereinigten Luft an den Raum. Dieses in der Regel quaderförmige Gehäuse wird von einer Schmalseite her beschickt und gibt die Luft über Luftzufuhröffnungen 10 ab, die vorzugsweise in den drei übrigen Stirnseiten des Gehäuses untergebracht sind, um eine möglichst große Fläche für die Luftzufuhröffnungen und damit geringe Austrittsgeschwindigkeiten der abgegebenen Luft zu ermöglichen. Zusätzlich sind in den Luftzufuhröffnungen außen horizontale, verstellbare Luftleitbleche angeordnete und noch innerhalb des Gehäuses eventuell zusätzliche, vertikale Luftleitbleche, um dadurch insgesamt die Strömungsrichtung der Luftzufuhr in Abhängigkeit der im Raum positionierten Gegenstände und Arbeitsplätze einstellen zu können.

## Patentansprüche

1. Verfahren zum Entfernen von Feinstäuben mit Partikelgrößen von 0,1 bis 100 µm, in Räumen, in denen Stäube unterhalb der Kopfhöhe der Benutzer neu entstehen, mit permanenter Luftumwälzung über Feinfilter,
**dadurch gekennzeichnet, daß** die Luftabsaugung unterhalb der Kopfhöhe der Benutzer stattfindet,
- die Luftzufuhr der gefilterten Luft möglichst weit oben im Raum stattfindet,
- die Strömungsgeschwindigkeit direkt an denjenigen Luftabsaugstellen, die sich an den Arbeitsplätzen befinden, nicht höher als 1,0 m/Sek. ist,
- die Strömungsgeschwindigkeit an den übrigen Luftabsaugstellen nicht höher als 2 m/Sek. ist und
- die Austrittsgeschwindigkeit der gefilterten Luftzufuhr so gewählt ist, daß die Strömungsgeschwindigkeit in Kopfhöhe kleiner als 2 m/Sek. beträgt.

2. Verfahren nach Anspruch 1,
**dadurch gekennzeichnet, daß** der Feinstaub der feine Anteil des Steinmehles in SteinmetzBetrieben ist.

3. Verfahren nach einem der vorhergehenden Ansprüche,
**dadurch gekennzeichnet, daß** die Luftabsaugung an Maschinen mit vertikalen Arbeitsflächen und nicht allseitig zugänglichen Handarbeitsplätzen knapp über der vom Benutzer abgewandten, rückwärtigen, im wesentlichen gesamten Hinterkante der Arbeitsfläche geschieht.

4. Verfahren nach Anspruch 1 oder 2,
**dadurch gekennzeichnet, daß** bei Maschinen mit punktförmigem oder linienförmigem, vertikal wirkenden Arbeitsmittel die Luftabsaugung mittels parallel zu dem Arbeitsmittel angeordneten Absaugschlitzen, versetzt in Beschleunigungsrichtung der Staubteilchen, geschieht.

5. Verfahren nach Anspruch 4,
**dadurch gekennzeichnet, daß** die Luftabsaugung wenigstens teilweise unterhalb des Bearbeitungspunktes am Werkstück stattfindet.

6. Verfahren nach einem der vorhergehenden Ansprüche,
**dadurch gekennzeichnet, daß** bei allseitig zugänglichen Handarbeitsplätzen die Luftabsaugung über horizontale Absaugschlitze in oder knapp über Arbeitshöhe stattfindet.

7. Verfahren nach Anspruch 6,
**dadurch gekennzeichnet, daß** die Ableitung der Luft von den Absaugschlitzen aus nach unten geschieht.

8. Verfahren nach Anspruch 6 oder 7,
**dadurch gekennzeichnet, daß** die Absaugschlitze höhenverstellbar sind.

9. Verfahren nach einem der vorhergehenden Ansprüche,
**dadurch gekennzeichnet, daß** die Absaugschlitze in der Seitenansicht schräg überhängend über der Arbeitsfläche angeordnet sind, und im Ansaugbereich horizontale, im wesentlichen zueinander parallel verlaufende Luftleitbleche die Luft zum Ableitungsrohr führen.

10. Verfahren nach einem der vorhergehenden Ansprüche,
**dadurch gekennzeichnet, daß** die Strömungsgeschwindigkeit im Filter höchstens halb so hoch ist, wie die durchschnittliche Strömungsgeschwindigkeit an den Luftabsaugstellen, höchsens jedoch 0,6 m/Sek. und die Strömungsgeschwindigkeit am Eintritt in den Filter etwa der Strömungsgeschwindigkeit an den Luftabsaugstellen entspricht.

11. Verfahren nach einem der vorhergehenden Ansprüche,
**dadurch gekennzeichnet, daß** die Umwälzkapazität so ausgelegt ist, daß die Luft innerhalb des Raumes mindestens 5 x /Std. umgewälzt wird.

12. Verfahren nach einem der vorhergehenden Ansprüche,
**dadurch gekennzeichnet, daß** die abgesaugte Luft über wenistens einen Schalldämmpfer geführt wird, wobei die Strömungsgeschwindigkeit im Schalldämpfer etwa der Strömungsgeschwindigkeit in den Ableitungsrohren, höchstens jedoch 1 bis 3m/Sek. beträgt.

13. Verfahren nach einem der vorhergehenden Ansprüche, wobei eine Anlage zum Absaugen des gesamten Staubes an den Maschinen mit sehr hoher Absauggeschwindigkeit vorhanden ist,
**dadurch gekennzeichnet, daß** der Luftauslaß der Schnellabsaugung an die Luftabsaugung für Feinstäube angeschlossen wird und durch Querschnittsanpassung die Strömungsgeschwindigkeit auf einen Wert, der nicht über der Strömungsgeschwindigkeit im Ableitungsrohr liegt, eingestellt wird.

14. Vorrichtung zur Feinstaubabsaugung, insbesondere nach dem Verfahren gemäß einem der vorhergehenden Ansprüche,
**dadurch gekennzeichnet, daß** als Filter wenigstens ein parallel geschalteter Taschenfilter mit Glasfasergewebe in einem Haltegitter als Filter verwendet werden.

15. Vorrichtung nach Anspruch 14,
**dadurch gekennzeichnet, daß** in den Luftweg jeweils vor und nach dem Filter ein Schalldämpfer angeordnet ist.

16. Vorrichtung nach Anspruch 15,
**dadurch gekennzeichnet, daß** im Schalldämpfer der Luftstrom in Einzelströme von maximal ca. 20 x 30 cm Querschnittsfläche aufgeteilt ist und die Einzelströme auf wenigstens ein Meter Länge so von Dämm-Material umgeben sind, daß die Schalldämmung mindestens 18 dB bei 200 bis 300 Hz beträgt.

17. Vorrichtung nach Anspruch 16,
**dadurch gekennzeichnet, daß** die Einzelströme innerhalb eines gemeinsamen Gehäuses parallel geführt werden.

18. Vorrichtung nach einem der Ansprüche 14 bis 17,
**dadurch gekennzeichnet, daß** die Schalldämpfer-Elemente mittels Körperschall absorbierenden Elementen mit der Tragvorrichtung und/oder den zu- und abführenden Rohrleitungen verbunden ist.

19. Vorrichtung nach Anspruch 18,
**dadurch gekennzeichnet, daß** als Körperschall absorbierendes Element eine umlaufende Dichtung zwischen den Schalldämpfer-Elementen und den angrenzenden Rohrleitungen verwendet wird.
